Europäisches Patentamt

European Patent Office

Office européen des brevets

(11) Veröffentlichungsnummer: **0 262 564**

**A2**

(12) **EUROPÄISCHE PATENTANMELDUNG**

(21) Anmeldenummer: **87113864.0**

(22) Anmeldetag: **23.09.87**

(51) Int. Cl.⁴: **C01B 17/48**

(30) Priorität: **03.10.86 DE 3633710**

(43) Veröffentlichungstag der Anmeldung:
**06.04.88 Patentblatt 88/14**

(84) Benannte Vertragsstaaten:
**BE DE ES FR GB**

(71) Anmelder: **BAYER AG**
**Konzernverwaltung RP Patentabteilung**
**D-5090 Leverkusen 1 Bayerwerk(DE)**

(72) Erfinder: **Lailach, Günter, Dr.**
**Bodelschwinghstrasse 23**
**D-4150 Krefeld(DE)**
Erfinder: **Gerken, Rudolf, Dr.**
**Ratherstrasse 79**
**D-4150 Krefeld(DE)**

(54) **Verfahren zur Herstellung von Schwefeldioxid.**

(57) Die vorliegende Erfindung betrifft ein Verfahren zur Herstellung von Schwefeldioxid durch thermische Spaltung von Metallsulfaten in Fließbettreaktoren mit schwefelhaltigen Reduktionsmitteln und Energielieferanten, wobei eine Mischung, bestehend aus den Metallsulfaten, den schwefelhaltigen Reduktionsmitteln und 75 bis 99 % der Energielieferanten in die Fließbettreaktoren eingespeist wird und der Rest der Energielieferanten gesondert in die fluidisierte Schicht der Fließbettreaktoren eingebracht wird.

EP 0 262 564 A2

## Verfahren zur Herstellung von Schwefeldioxid

Die vorliegende Erfindung betrifft ein Verfahren zur Herstellung von Schwefeldioxid durch thermische Spaltung von Metallsulfaten in Fließbettreaktoren mit schwefelhaltigen Reduktionsmitteln und Energielieferanten.

Bei der thermischen Spaltung von Metallsulfaten, insbesondere von schwefelsäurehaltigen Eisensulfat-Monohydrat-reichen Salzgemischen, wie sie bei der Schwefelsäurerückgewinnung aus Titandünnsäure oder Beizlaugen anfallen, haben sich Wirbelbettreaktoren prinzipiell bewährt. Sie zeichnen sich durch hohe spezifische Leistung und relativ geringen Instandhaltungsaufwand aus.

Als Reduktionsmittel und Energielieferanten für die stark endothermen Reaktionen werden sowohl Schwefel und Schwefelkies als auch kohlenstoffhaltige Brennstoffe wie Kohle, Koks und Heizöl eingesetzt. Es ist vorteilhaft, so viel schwefelhaltige Reducktionsmittel einzusetzen, daß ein Spaltgasgemisch resultiert, das nach dem Mischen mit Luft mindestens 6 Vol.-% $SO_2$ und 6 Vol.-% $O_2$ enthält und für die Umsetzung am Schwefelsäurekontakt geeignet ist. Der Umfang des Einsatzes kohlenstoffhaltiger Reduktionsmittel wird außer durch wirtschaftliche Gründe dadurch festgelegt, daß nur soviel $SO_2$ bei der Metallsulfatspaltung produziert werden darf, wie als $SO_2$ oder als Schwefelsäure Verwendung finden kann. Aus diesen Gründen müssen häufig schwefelhaltige und kohlenstoffhaltige Reduktionsmittel gleichzeitig eingesetzt werden.

Voraussetzung für eine möglichst vollständige Zersetzung der Metallsulfate zu Metalloxiden, $SO_2$ und $O_2$ ist eine genügend lange Verweilzeit in der Reaktionszone und eine ausreichende Energiezufuhr. Letztere setzt eine gute Vermischung der Metallsulfate mit den Reduktionsmitteln voraus, erstere die Einbringung der Reaktionsmischung direkt in das feststoffreiche, fluidisierte Fließbett. Eine bewährte Methode ist das seitliche Einblasen einer Metallsulfatsuspension in die Fließbettschicht. Diese Methode bietet den Vorteil der günstigeren Handhabbarkeit einer Suspension im Vergleich zu Feststoffen, insbesondere, wenn die Metallsulfate Schwefelsäure als Feuchte enthalten. Kommen als Schwefelkies statt der kaum noch verfügbaren relativ grobteiligen Feinkiese die sehr feinteiligen Flotationskiese zum Einsatz, so entstehen dadurch zusätzliche Probleme. In DE-A 3 328 710 wird vorgeschlagen, den Flotationskies mit Schwefelsäure zu befeuchten und in die Wirbelschicht einzublasen.

Bei großen Fließbettreaktoren entstehen aber Probleme dadurch, daß eine gleichmäßige Mischung der energieverbrauchenden und energieliefernden Ausgangsstoffe im Fließbett bestenfalls näherungsweise zu erreichen ist. Um die gleichmäßige Verteilung der Metallsulfate und des Flotationskieses zu ermöglichen und gleichzeitig die störungsfreie Einbringung des Flotationskieses in die Fließbettreaktoren zu gewährleisten, wird in DE-A 3 328 710 vorgeschlagen, Granalien aus insbesondere schwefelsäurehaltigen Metallsulfaten herzustellen und mit Flotationskies zu umhüllen. Diese aus einem hygroskopischen Kern und einer schützenden Hüllschicht aus Schwefelkies bestehenden Granalien lassen sich gut in die Reaktoren eintragen. Probleme entstehen jedoch dann, wenn zur Aufbringung der Reaktionsenergie relativ viel kohlenstoffhaltige Brennstoffe eingesetzt werden müssen. Werden die Brennstoffe in größeren Mengen seitlich oder von unten in die Fließbettschicht eingetragen, so ergeben sich dadurch erhebliche Störungen des Reaktorbetriebe, daß örtlich stark reduzierende Bedingungen herrschen, während an anderen Stellen Abkühlung des Bettes durch Brennstoffmangel resultiert, die zu einer unzureichenden Sulfatspaltung führt.

Aufgabe der vorliegenden Erfindung ist somit die Bereitstellung eines wirtschaftlichen Verfahrens, welches nicht die Nachteile der beschriebenen Verfahren aufweist.

Ein besonderes Ziel ist die störungsfreie Verarbeitung von Metallsulfaten, die Schwefelsäure als Restfeuchte enthalten. Insbesondere soll als schwefelhaltiger Rohstoff Flotationskies eingesetzt werden.

Diese Aufgabe wird dadurch gelöst, daß bei der Spaltung von Metallsulfaten in Fließbettreaktoren ein Teil der erforderlichen Spaltenergie durch separate Energie-oder Brennstoffzufuhr in geregelter Form in Abhängigkeit von der Reaktionstemperatur in die Reaktoren eingebracht wird.

Gegenstand der vorliegenden Erfindung ist somit ein Verfahren zur Herstellung von Schwefeldioxid durch thermische Spaltung von Metallsulfaten in Fließbettreaktoren mit schwefelhaltigen Reduktionsmitteln und Energielieferanten, welches dadurch gekennzeichnet ist, daß eine Mischung bestehend aus den Metallsulfaten, den schwefelhaltigen Reduktionsmitteln und 75 bis 99 % der Energielieferanten in die Fließbettreaktoren eingespeist wird und der Rest der Energielieferanten gesondert in die fluidisierte Schicht der Fließbettreaktoren eingebracht wird.

Die Zuführung dieser Energie wird vorteilhaft so gesteuert, daß die Reaktionstemperatur in den Reaktoren auch bei wechselnder Zusammensetzung der kompaktierten Rohstoffmischung aufrechterhalten wird. Dieser Anteil von 1 bis 25 % der geamten Spaltenergie kann dadurch eingebracht werden, daß die Fluidisierungs-und Verbrennungsluft auf eine Temperatur von 25 bis 400°C vorgewärmt wird. Er kann aber auch dadurch aufgebracht werden, daß leicht zu dosierende kohlenstoffhaltige Brennstoffe in die Fließbettschicht eingebracht werden. Eine besonders bevorzugte Ausführungsform des erfindungsgemäßen Verfahrens besteht somit darin, daß der Rest der Energielieferanten in Form von kohlenstoffhaltigen Brennstoffen zugeführt wird.

Gemäß einer ebenso bevorzugten Ausführungsform des erfindungsgemäßen Verfahrens wird der Rest der Energielieferanten dem Reaktor durch Vorwärmung der Fluidisierungsluft oder sauerstoffangereicherten Fluidisierungsluft eingebracht.

Die direkt in die Fließbettreaktoren eingetragenen Brennstoffe können an einer oder mehreren Stellen seitlich oder von unten in die fluidisierte Feststoffschicht eingespeist werden. Für diesen Zweck sind Heizöl, Erdgas oder feinteilige Kohle geeignet. Letztere wird vorteilhaft pneumatisch eingespeist.

Besonders vorteilhaft ist die Ausführungsform des erfindungsgemäßen Verfahrens, gemäß der der Rest der Energielieferanten dem Reaktor durch Vermischen der Fluidisierungsluft mit maximal 2 Vol-% brennbaren Gasen eingebracht wird.

Die erfindungsgemäß bevorzugten Reduktionsmittel sind Schwefel und/oder Schwefelkies. Es ist problematisch, schwefelsäurehaltige Metallsulfate zu fördern, zu dosieren und in Reaktoren einzutragen. Die Probleme können nach dem Stand der Technik weitgehend vermieden werden, wenn die Sulfate als Suspension in Wasser oder Schwefelsäure eingespeist werden. Je wasserhaltiger die zu spaltenden Metallsulfate sind, desto mehr Energie wird für die Verdampfung dieses Wassers bei Temperaturen von 800 bis 1100°C verbraucht. Eine wirtschaftlich günstige Ausführungsform des erfindungsgemäßen Verfahrens besteht darin, daß die gegebenenfalls schwefelsäurehaltigen Metallsulfate mit den schwefelhaltigen Reduktionsmitteln und zumindest einem Teil des Restes der Energielieferanten gemischt und kompaktiert, vorzugsweise granuliert, brikettiert oder pelletiert und so in die Fließbettreaktoren eingetragen werden.

Für die kompaktierte Rohstoffmischung können als schwefelhaltige Reduktionsmittel Schwefel, verunreinigte Schwefelabfälle und/oder Schwefelkies, bevorzugt Flotationskies, eingesetzt werden. Als kohlenstoffhaltige Brennstoffe können Kohle, Koks und/oder schweres Heizöl verwendet werden. Bei thixotropen schwefelsäurehaltigen Metallsulfaten können Probleme bei der Kompaktierung der Rohstoffmischung auftreten. Diese können dadurch vermieden werden, daß der Mischung eine möglichst geringe Menge des bei der Metallsulfatspaltung anfallenden Abbrandes als Magerungsmittel zugesetzt wird. Bevorzugt werden die Metallsulfate bei der Atrennung der Schwefelsäure aber mechanisch, z.B. durch Ausblasen mit Luft oder Abpressen, soweit entfeuchtet, daß sie keine oder nur geringe Thixotropie aufweisen un im Gemisch mit den schwefelhaltigen und kohlenstoffhaltigen Rohstoffen ohne Probleme komparktierbar sind.

Als Verfahren zur Kompaktierung kommen bekannte Verfahren wir Granulierung, Pelletierung oder Brikettierung infrage. Gegebenenfalls werden die kompaktierten Rohstoffe vor dem Eintrag in die Fließbettreaktoren auf eine für die Fluidisierung geeignete Körnung gebrochen.

Die Vorteile des erfindungsgemäßen Verfahrens sind insbesondere folgende: Es wird eine gleichmäßige Temperaturverteilung im Fließbett und damit einhergehend eine maximale Sulfatspaltung erreicht. Die geforderte Reaktionstemperatur kann eingehalten werden, auch wenn die Zusammensetzung der Rohstoffmischung in den rohstoff- und verfahrensbedingten Grenzen variiert.

Es werden größere örtliche Unterschiede der Temperatur und der Gaszusammensetzung (oxidierend/reduzierend) vermieden, besonders, wenn die Energie zur Temperatursteuerung durch Erwärmung des Fluidisierungsgases (Luft oder sauerstoffangereicherte Luft) zugeführt wird.

Als kompaktierte Mischung lassen sich die als solche klebenden und deshalb schwierig zu handhabenden Rohstoffe ohne Hilfsmittel wie Wasser oder Schwefelsäure unproblematisch in die Fließbettreaktoren eintragen.

Die Vorteile des erfindungsgemäßen Verfahrens sollen durch die folgenden Beispiele verdeutlicht werden, ohne daß hierin eine Einschränkung zu sehen ist.

Beispiel 1

12 t/h Metallsulfate und -hydrogensulfate (überwiegend $FeSO_4 \cdot H_2O$, daneben Al-, Mg-, Ti-, Mn-, Cr-, V-Verbindungen) mit 13 bis 15 Gew.-% 65 %iger $H_2SO_4$ als Restfeuchte (schwankende Gehalte ergaben sich durch chargenweise Filtration) wurden mit 4,3 t/h Flotationskies (48 Gew.-% S; 90 % <0,1 mm Teilchengröße; Feuchte 5,5 Gew.-%) und 1,9 t/h Brikettabrieb kontinuierlich gemischt und pelletiert. Die Pellets wurden in einem Vorratsbunker zwischengelagert. Aus dem Bunker wurden 18,2 t/h Pellets abgezogen. Die kompaktierte Mischung fiel in einen Injektor, durch den sie mit Druckluft seitlich in die ca. 1,5 m hohe Fließbettschicht eingeblasen wurde.

Durch den 12 m² großen Anströmboden des Fließreaktors wurden 19.000 $m^3_n$ Luft/h eingeblasen. Um die Raktionstemperatur im Fließbett zwischen 950 und 970°C zu halten, wurden zusätzlich durchschnittlich 280 $m^3_n$/h Erdgas zur Fluidisierungsluft zugegeben. Der momentane Mengenstrom lag zwischen 200 und 340 $m^3_n$/h Erdgas. Die aus dem Reaktor austretenden Spaltgase hatten folgende Zusammensetzung (ohne Berücksichtigung des Abbrandstaubes):

1 - 1,5 Vol.-% $O_2$
11 - 12 Vol.-% $SO_2$
7,8 - 8,2 Vol.-% $CO_2$
58 - 59 Vol.-% $N_2$
20,5 - 21,5 Vol.-% $H_2O$
<10 mg/$m^3_n$ brennbare Gase.
Die $SO_2$-Produktion lag bei 8,5 t/h.

Beispiel 2

Rohstoffe ananlog Beispiel 1 wurden in folgendem durchschnittlichen Gewichtsverhältnis gemischt und brikettiert:

100 Teile schwefelsäurehaltige Metallsulfate
30 Teile Flotationkies
9 Teile Schwefel (Korngröße <5 mm)
16 Teile Brikettabrieb

21,2 t/h Briketts wurden analog Beispiel 1 in den Fließbettreaktor eingetragen.

Zur Aufrechterhaltung der gewünschten Reaktionstemperatur von 950 bis 970°C wurden die 19,000 $m^3_n$ /h Fluidisierungsluft in einem Erdgasbefeuerten Anheizer auf eine Temperatur zwischen 210 und 330°C vorgewärmt.

Die Spaltgase enthielten (ohne Abbrand)

1 - 1,5 Vol.-% $O_2$
12 - 12,4 Vol.-% $SO_2$
7,7 - 8,1 Vol.-% $CO_2$
57,5 - 58 Vol.-% $N_2$
20,9 - 21,3 Vol.-% $H_2O$
<10 mg/$m^3_n$ brennbare Gase.
Die $SO_2$-Produktion betrug 9 t/h.

Ansprüche

1. Verfahren zur Herstellung von Schwefeldioxid durch thermische Spaltung von Metallsulfaten in Fließbettreaktoren mit schwefelhaltigen Reduktionsmitteln und Energielieferanten, dadurch gekennzeichnet, daß eine Mischung, bestehend aus den Metallsulfaten, den schwefelhaltigen Reduktionsmitteln und 75 bis 99 % der Energielieferanten in die Fließbettreaktoren eingespeist wird und der Rest der Energielieferanten gesondert in die fluidisierte Schicht der Fließbettreaktoren eingebracht wird.

2. Verfahren gemäß Anspruch 1, dadurch gekennzeichnet, daß das Einbringen des Restes der Energielieferanten so gesteuert wird, daß die gewünschte Reaktionstemperatur im Reaktor aufrechterhalten wird.

3. Verfahren gemäß einem der Ansprüche 1 oder 2, dadurch gekennzeichnet, daß der Rest der Energielieferanten in Form von kohlenstoffhaltigen Brennstoffen zugeführt wird.

4. Verfahren gemäß einem der Ansprüche 1 oder 2, daurch gekennzeichnet, daß der Rest der Energielieferanten dem Reaktor durch Vorwärmung der Fluidisierungsluft oder sauerstoffangereicherten Fluidisierungsluft in den Reaktor eingebracht wird.

5. Verfahren gemäß einem der Ansprüche 1 oder 2, dadurch gekennzeichnet, daß der Rest der Energielieferanten durch Vermischen der Fluidisierungsluft mit maximal 2 Vol.-% brennbaren Gasen in den Reaktor eingebracht wird.

6. Verfahren gemäß einem oder mehrerer der Ansprüche 1 oder 2, dadurch gekennzeichnet, daß die schwefelhaltigen Reduktionsmittel Schwefel und/oder Schwefelkies sind.

7. Verfahren gemäß einem oder mehrerer der Ansprüche 1 bis 6, dadurch gekennzeichnet, daß die Metallsulfate und/oder Metallhydrogensulfate Schwefelsäure als Restfeuchte enthalten.

8. Verfahren gemäß einem oder mehrerer der Ansprüche 1 bis 6, dadurch gekennzeichnet, daß die gegebenenfalls schwefelsäurehaltigen Metallsulfate mit den schwefelhaltigen Reduktionsmitteln und zumindest einem Teil der Energielieferanten gemischt und kompaktiert, vorzugsweise granuliert, brikettiert oder pelletiert werden.